# EUROPEAN PATENT SPECIFICATION

(11) **EP 2 058 604 B1**
(45) Date of publication and mention of the grant of the patent: **01.09.2010**
(21) Application number: 08018766.9
(22) Date of filing: 28.10.2008
(51) Int. Cl.: F24J 2/26

(54) **Improved solar collector**
Verbesserter Sonnenkollektor
Collecteur solaire amélioré

(30) Priority: 06.11.2007 BE 200700537
(43) Date of publication of application: 13.05.2009
(73) Proprietor: VIKTOR G.,, 2840 REET(RUMST) (BE)
(72) Inventor: Moons, Marc, 2840 Rumst (BE)
(74) Representative: Donné, Eddy

(56) References cited:
- DE-A1- 3 108 730
- DE-U1- 29 820 899
- GB-A- 2 027 873
- US-A- 1 802 635
- US-A- 4 109 640
- US-A- 4 114 598
- US-A- 4 326 583

## Description

The present invention concerns a solar collector.

It is generally known that a solar collector is a metal or plastic element through which a medium flows and which thus absorbs the gained heat and subsequently carries it off together with the medium. The gained heat is usually carried of to a boiler which is used to heat domestic water or the water of swimming pools.

There are many different types of solar collectors. Some examples are flat collector plates, vacuum tubes with reflectors, deep or shallow solar ponds, tubular systems built-in in large surfaces, CPC's (composed parabolic collectors), cylindrical reflectors, parabolic troughs, Fresnel reflectors with a focal line, parabolic dishes and central receivers in a mirror field. Of all these types, especially the flat collector plates and the vacuum tubes with reflectors are used.

The core of a flat solar collector is a black plate, called the collector plate or absorbing plate. By putting the absorbing plate in an insulating bin, the absorbing plate will absorb more heat than it gives off to the environment in case of incident sunlight.

As a result, the temperature of the absorbing plate rises, and as soon as the temperature of the absorbing plate is higher than the ambient temperature, and as this difference increases, the heat flow from the absorbing plate to the environment increases. When the heat flow from the absorbing plate to the environment has become so large that it is equal to the absorbed heat, the temperature of the absorbing plate will no longer rise.

If a transparent cover plate is placed on top of the absorbing plate, apart from the insulation on the rear and the lateral side, the heat transfer from the absorbing plate to the environment will decrease, and the temperature of the absorbing plate will rise.

In order to be able to use the gained heat, pipes are mounted on the back of the absorbing plate through which a medium, usually water, flows. This water circulates between the collector and what is called a solar boiler.

Such solar collectors are known from for example DE 3 108 730 and US 4 114 598.

As the temperature of the absorbing plate is higher than that of the water, the temperature of the water will rise. This is the case until the water has reached the same temperature as the absorbing plate. Next, the water in the boiler can be used for different purposes.

Two systems are customary when using a solar collector for heating domestic water.

In the case of the thermosyphon system, an expansion tank is placed above the solar collector, which expansion tank is designed to account for the expansion of the water volume in the circuit.

As the water in this system heats the solar collector, it will rise, and a natural circulation is obtained in the circuit. This system is very environmentally friendly, but putting an expansion tank above the solar collector may be physically difficult. A second possibility is a forced circulation, whereby a pump provides for the circulation. The energy that is required for pumping may be solar energy, as the circulation is only required when there is incident sunlight.

A pump system preferably also requires electronic measuring equipment to measure the temperature gradient over the solar collector to thus adjust the pump flow if required.

As the solar collector heats up, thermal losses occur which reduce the efficiency of the solar collector. Traditionally, this is limited in two ways.

A first way is to put a glass plate on the absorbing plate, such that the radiated heat is maintained within the air-filled gap between both plates. This is an example of the greenhouse effect which is emphasized by the characteristics of the used glass, that allows sunrays in the visible and the ultraviolet light spectrum to pass easily, but that makes it harder for reflected infrared rays of a lower frequency to pass. As the air is trapped, thermal losses due to convection are reduced as well.

A second way to increase the efficiency is by cooling the absorbing plate. This is done by making sure that the coldest heat-transferring liquid flows through the absorbing plate at a sufficiently high flow rate. The absorbed heat is discharged by the liquid by which the absorbing plate is cooled. The discharged liquid can then be stored, be carried off by a heat-exchanger or be used as heating, for example floor or bottom heating.

However, it is clear that the yield of the heat transfer of the absorbing plate to the liquid is of major importance for an installation that is as efficient as possible.

The present invention describes a solar collector that aims to remedy one or several of the above-mentioned and other disadvantages.

To this end, the invention concerns an improved solar collector whereby the solar collector is provided with an absorbing plate and at least one channel through which a fluid can flow, whereby the absorbing plate is not flat and is provided with at least one roof-shaped or undulatory part, whereby the above-mentioned channel is provided on the ridge of the above-mentioned roof-shaped, on the top of the above-mentioned undulatory part respectively and extends in the longitudinal direction of the ridge or the top and whereby the channel is formed of a tube which is connected to the ridge of the roof-shaped part or to the top of the underlating part by means of a standing post and which extends in the direction of the ridge. An advantage of this improved solar collector according t the invention is that the heat is more efficiently collected and transferred to the fluid. Consequently, this results in a better efficiency for a system in which a solar collector according to the invention is incorporated.

As this results in that a solar collector can be used on average longer per year in moderately sunny regions such as Central Europe, this obviously contributes to the environment, to reaching the Kyoto standards and to counteracting climate changes in general.

Surprisingly, it was found that a better yield can be obtained by forming the channels as a tube which is connected to the ridge of the above-mentioned roof-shaped part or to the top of the above-mentioned undulating part by means of a standing post. The reason why is not clear yet, but it is presumed that this embodiment according to the invention leads the heat flows better away to the tubular channel.

In order to better explain the characteristics of the invention, the following embodiments of an improved solar collector according to the invention are described by way of example only without being limitative in any way, with reference to the accompanying drawings, in which:

figures 1 to 4 schematically represent various examples of a cross section of solar collector.
Figure 1 schematically shows a cross section of an improved solar collector 1 according to the invention, whereby the solar collector 1 is provided with an absorbing plate 2 and, according to the figure, with three channels through which a fluid flows when using the solar collector 1. The absorbing plate 2 is not flat and it is provided with three roof-shaped parts 4, whereby the above-mentioned channels 3 are provided in the longitudinal direction of the ridges 5 and on said ridges 5 of the roof-shaped parts 4 by means of posts 6.
Figure 2 shows another example of a solar collector 1, whereby the posts 6 have been omitted and the channels 3 are provided directly on the ridges 5 of the roof-shaped parts 4.
Figure 3 shows another example of a solar collector 1, whereby the absorbing plate 2 has three undulating parts 7, whereby the channels 3 are provided analogously directly above the tops 8 of the undulating parts 7.
Figure 4 shows another example of a solar collector 1, whereby the solar collector 1 is encapsulated in an insulating material 9 and is vacuum sealed by means of a glass or sunlight-transmitting cover plate 10.

The working of an improved solar collector 1 according to the invention is simple and as follows. On the roof of a house or another surface which is exposed to sunlight is placed a solar collector 1 which is filled with a fluid which is heated in the channel 3 under the influence of sunlight.

In most cases, the improved solar collector is traditionally connected to a hydraulic circuit for heating domestic water or the water of a swimming pool. In all practical cases, the fluid that is used is a liquid. However, thanks to the non-flat structure of the absorbing plate 2 in the improved solar collector 1, a higher yield is obtained.

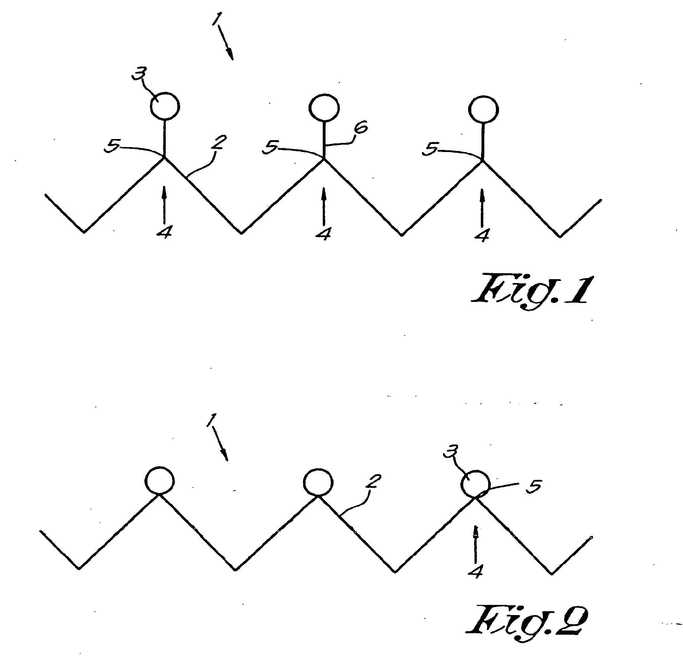

Indeed, as the absorbing plate 2 has a non-flat shape but is provided with a roof-shaped part in figure 1, a larger surface will be heated by the sunlight. Consequently, a larger part of the heat transfer will take place via conduction than is the case with a flat absorbing plate 2. Thanks to the improved shape of the absorbing plate 2, the heat flow, which rises in the absorbing plate 2, will flow to the channels 3 and thus contribute in a better way to the heating of the fluid.

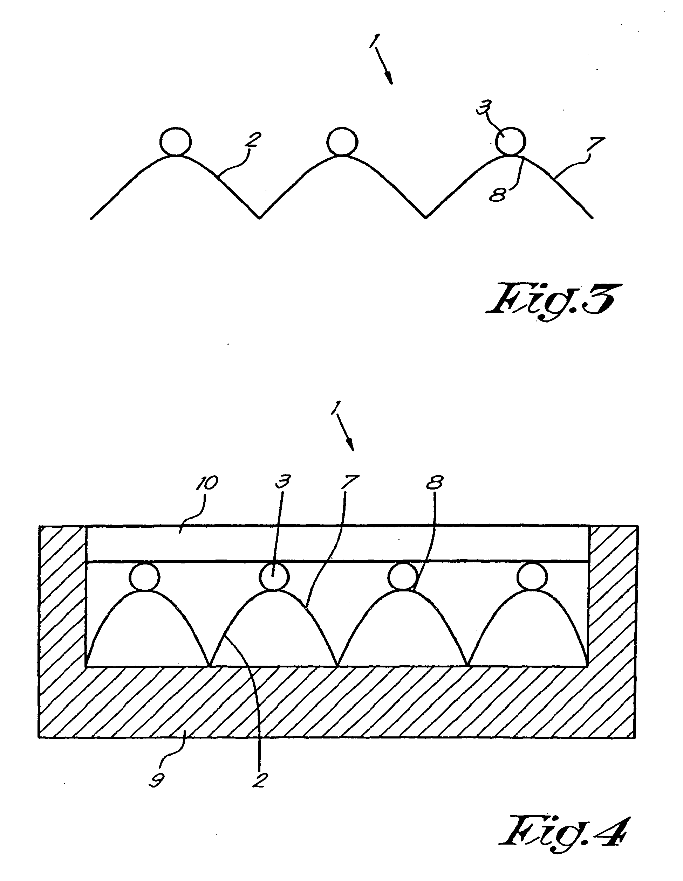

By moreover providing the heat-transferring channels 3 near the ridges 5 or the tops 8 of the roof-shaped (as represented in figures 1 to 4 included), the undulating (as shown in figures 5 and 6) parts 4, 7 respectively, part of the radiated heat which is emitted through the bottom of the absorbing plate 2 will be absorbed and, as a consequence, the heat losses will be less than with a conventional solar collector 2.

Hereby can be mentioned that the posts 6 in figure 1 act as "chimneys" and transfer the heat via conduction to the channels 3.

The essence of the invention is the use of an improved solar collector 1 with a non-flat absorbing plate 2 and the use of standing posts to connect the tubes to the absorbing plate. In the figures as represented, the absorbing plate 2 has roof-shaped or undulating parts 4, 7 respectively, whereby the heat losses that occur in every solar collector are smaller as the channels 3 with the heat-transferring liquid are provided directly or via the above-mentioned standing posts 6 on the ridges 5 or on the tops 8 of said non-flat parts 4, 7 respectively in the direction of the tops or ridges.

However, the invention does not exclude that the absorbing plate consists of a combination of roof-shaped and undulating parts 4 and 7.

The undulating parts 7, as shown in the figures, only serve as an example. It is clear that the wave concerned may be formed of a sinusoid or, more in general, of any arbitrary periodic function.

The present invention is by no means restricted to the embodiments described by way of example and represented in the accompanying drawings; on the contrary, such an improved solar collector according to the invention can be made in many different ways while still remaining within the scope of the invention, as defined by the claims.

## Claims

1. Improved solar collector whereby the solar collector (1) is provided with an absorbing plate (2) and at least one channel (3) through which a fluid can flow and whereby the absorbing plate (2) is not flat and is provided with at least one roof-shaped (4) or undulating (7) part, whereby the above-mentioned channel (3) is provided on the ridge (5) of the above-mentioned roof-shaped, on the top (8) of the above-mentioned undulating (7) part respectively and extends in the longitudinal direction of the ridge (5) or the top (8) and whereby the above-mentioned channel (3) is formed of a tube, **characterised in that** the tube is connected to the ridge (5) of the above-mentioned roof-shaped part (4) or to the top (8) of the above-mentioned undulating part (7) by means of a standing post (6).

2. Improved solar collector according to claim 1, **characterised in that** the solar collector is made of a heat-conducting material.

3. Improved solar collector according to claim 1 or 2, **characterised in that** the solar collector is made of a single material.

4. Improved solar collector according to any one of the preceding claims, **characterised in that** the whole is covered by a glass or a sunlight-transmitting cover plate (10).

5. Improved solar collector according to any one of the preceding claims, **characterised in that** several channels (3) are provided.

6. Improved solar collector according to any one of the preceding claims, **characterised in that** the absorbing plate (2) has a heat-absorbing colour, for example black.

## Patentansprüche

1. Verbesserter Sonnenkollektor, wobei der Sonnenkollektor (1) mit einer Absorberplatte (2) und mindestens einem Kanal (3), durch den ein Fluid fließen kann, versehen ist, und wobei die Absorberplatte (2) nicht flach ist und mit mindestens einem dachförmigen (4) oder wellenförmigen (7) Teil versehen ist, wobei der vorgenannte Kanal (3) auf dem First (5) des vorgenannten dachförmigen beziehungsweise auf dem Scheitel (8) des vorgenannten wellenförmigen (7) Teils angebracht ist und sich in der Längsrichtung des Firsts (5) oder des Scheitels (8) erstreckt und wobei der vorgenannte Kanal (3) durch ein Rohr gebildet wird, **dadurch gekennzeichnet, dass** das Rohr mittels eines stehenden Pfostens (6) mit dem First (5) des vorgenannten dachförmigen Teils (4) oder mit dem Scheitel (8) des vorgenannten wellenförmigen Teils (7) verbunden ist.

2. Verbesserter Sonnenkollektor nach Anspruch 1, **dadurch gekennzeichnet, dass** der Sonnenkollektor aus einem wärmeleitenden Material besteht.

3. Verbesserter Sonnenkollektor nach Anspruch 1 oder 2, **dadurch gekennzeichnet, dass** der Sonnenkollektor aus einem einzigen Material besteht.

4. Verbesserter Sonnenkollektor nach einem der vorgenannten Ansprüche, **dadurch gekennzeichnet, dass** das Ganze mit einer Glas- oder einer sonnenlichtdurchlässigen Abdeckplatte (10) abgedeckt ist.

5. Verbesserter Sonnenkollektor nach einem der vorgenannten Ansprüche, **dadurch gekennzeichnet, dass** mehrere Kanäle (3) angebracht sind.

6. Verbesserter Sonnenkollektor nach einem der vorgenannten Ansprüche, **dadurch gekennzeichnet, dass** die Absorberplatte (2) eine wärmeabsorbierende Farbe, beispielsweise Schwarz, hat.

## Revendications

1. Capteur solaire perfectionné par lequel le capteur solaire est muni d'une surface absorbante (2) et d'au moins un canal (3) à travers lequel un fluide peut s'écouler, et par lequel la surface absorbante (2) n'est pas plate et est munie d'au moins un élément en forme de toit (4) ou d'un élément ondulé (7), le canal susmentionné (3) étant prévu sur la crête (5) de l'élément susmentionné en forme de toit, sur le sommet (8) de l'élément ondulé susmentionné (7), respectivement, et s'étendant dans la direction longitudinale de la crête (5) ou du sommet (8), et le canal susmentionné (3) prenant la forme d'un tube, **caractérisé en ce que** le tube est relié à la crête (5) de l'élément susmentionné en forme de toit ou au sommet (8) de l'élément ondulé susmentionné (7) au moyen d'un montant droit (6).

2. Capteur solaire perfectionné selon la revendication 1, **caractérisé en ce que** le capteur solaire est réalisé en un matériau thermoconducteur.

3. Capteur solaire perfectionné selon la revendication 1 ou 2, **caractérisé en ce que** le capteur solaire est réalisé en un matériau unique.

4. Capteur solaire perfectionné selon l'une quelconque des revendications précédentes, **caractérisé en ce que** l'ensemble est recouvert de verre ou d'une plaque de recouvrement (10) qui transmet la lumière solaire.

5. Capteur solaire perfectionné selon l'une quelconque des revendications précédentes, **caractérisé en ce qu'**on prévoit plusieurs canaux (3).

6. Capteur solaire perfectionné selon l'une quelconque des revendications précédentes, **caractérisé en ce que** la surface absorbante (2) possède une couleur qui absorbe la chaleur, par exemple une couleur noire.
